## Europäisches Patentamt

## European Patent Office

## Office européen des brevets

(19)

(11) Veröffentlichungsnummer: **0 080 591**
**B1**

(12) # EUROPÄISCHE PATENTSCHRIFT

(45) Veröffentlichungstag der Patentschrift:
**17.12.86**

(51) Int. Cl.⁴: **F 16 L 39/02,** E 03 C 1/00

(21) Anmeldenummer: **82109490.1**

(22) Anmeldetag: **14.10.82**

(54) **Verbindungsvorrichtung für Sanitärinstallationen mit flexibler beiderends Anschlussmittel aufweisender Verbindungsleitung.**

(30) Priorität: **26.11.81 CH 7567/81**

(43) Veröffentlichungstag der Anmeldung:
**08.06.83 Patentblatt 83/23**

(45) Bekanntmachung des Hinweises auf die Patenterteilung:
**17.12.86 Patentblatt 86/51**

(84) Benannte Vertragsstaaten:
**DE FR IT**

(56) Entgegenhaltungen:
**AT-B-311 751**
**DE-A-2 249 449**
**DE-A-2 302 907**
**FR-A-1 065 308**
**FR-A-2 398 247**
**US-A-3 809 128**

(73) Patentinhaber: **Aktiengesellschaft Karrer, Weber & Cie., CH- 5726 Unterkulm (CH)**

(72) Erfinder: **Hunziker, Werner, Fliederweg 865, CH-5726 Unterkulm (CH)**

(74) Vertreter: **Willi, Anton, J., Alsenmattstrasse 2, CH-8800 Thalwil (CH)**

LIBER, STOCKHOLM 1986

## Beschreibung

Gegenstand der Erfindung ist eine Verbindungsvorrichtung zwischen der ventilbestückten Anschlussarmatur und der Wasserausgabevorrichtung einer Sanitärinstallation mit einer flexiblen, beiderends Anschlussmittel aufweisenden Verbindungsleitung, die zur getrennten Durchleitung unterschiedlicher Medien gleichlaufende Kanäle aufweist.

Bekannte Vorrichtungen dieser Art, wie sie üblicherweise in Form eines z.B. ausziehbar montierten Schlauchs für den Anschluss, z.B. einer Handbrause, an eine Wasserzuführstelle verwendet werden, besitzen einen mit Anschlussnippeln versehenen wasserführenden Innenschlauch aus gummielastischem Material, der von einem doppelt gewickelten Metallmantel umschlossen ist. Solche Verbindungsvorrichtungen zwischen einer Wasserzuführ- und einer Wasserverbrauchstelle eignen sich überall dort, wo keine starren Verbindungsleitungen erwünscht oder möglich sind. Umständlich wird diese Verbindungsart jedoch dann, wenn mehrere Medien, mit entsprechend vielen Schläuchen, z.B. Heiss- und Kaltwasser, zur Verbrauchsstelle geführt werden müssen, dies besonders dann, wenn die Verbindungsschläuche ausziehbar sein sollen. Analoges gilt auch dann, wenn das an den Medienschlauch angeschlossene Ausgabegerät mit elektrischen Bedienungs- bzw. Steuerorganen für die Medienausgabe versehen werden soll und damit Zahl und Platzanspruch der Verbindungsleitungen entsprechend gross werden.

Es sind zwar für verschiedene Anwendungszwecke Mehrkanalleitungen bekannt, die z.B. aus mehreren nebeneinanderliegenden und entweder gemeinsam ummantelten oder miteinander verbundenen Rohren oder Schläuchen bestehen. Diese Bauart führt zwangsläufig zu relativ grossen Leitungsquerschnitten und ist deshalb für Sanitärinstallationen wenig geeignet. Man hat deshalb schon vorgeschlagen, die Kanäle einer solchen Leitung durch mit radialem Abstand koaxial ineinander geführte biegsame Rohre oder Schläuche zu bilden (DE-A- 2 249 449). Koaxiale Kanäle können aber z.B. beim Biegen der Leitung zu Schwierigkeiten führen, wenn nicht relativ komplizierte Abstandhalter für die inneren Rohre bzw. Schläuche vorgesehen sind. Davon abgesehen ist aber auch hier der für den Mediendurchgang zur Verfügung stehende Querschnitt bei gegebenem Leitungsdurchmesser relativ klein und das Auseinanderführen der koaxialen Kanäle an den Leitungsenden ist relativ kompliziert. Ein weiterer Nachteil dieser Bauart kann darin liegen, dass bei koaxialer Druckleitung stark unterschiedlich warmer Medien, z.B. Heiss- und Kaltwasser, ein unerwünschter Temperaturausgleich auftreten kann.

Es sind zwar schon flexible, armierte Kunststoffrohre mit durch Querstege unterteilten, gleichlaufenden Kanälen vorgeschlagen worden, die insbesondere als Leichtbauelemente zum Teil auch zur Durchleitung von Medien bestimmt waren. Ihre relativ grosse Steifheit macht sie aber für Sanitärinstallationen ungeeignet und das Problem der einwandfreien Endanschlüsse war bisher nicht gelöst (FR-A- 2 398 247).

Die vorliegende Erfindung bezweckt diese Nachteile zu vermeiden und eine Verbindungsvorrichtung der genannten Art zu schaffen, die für praktisch beliebige Medienzufuhr geeignet, kompakt und, wenn erwünscht, ohne Schwierigkeiten ausziehbar gestaltet werden kann.

Zu diesem Zweck ist die erfindungsgemässe Verbindungs,vorrichtung dadurch gekennzeichnet, dass in einem flexiblen Schutzmantel mit Kreisquerschnitt ein, ebenfalls Kreisquerschnitt aufweisender, durch eine innere Trennwand in die Kanäle aufgeteilter flexibler Schlauch aus gummielastischem Material angeordnet ist, wobei die Endpartien des Schlauches mittels je einer zylindrischen Verbindungshülse auf im Querschnitt den Kanälen angepassten Anschlussnippeln festgeklemmt sind, so daß die kreisförmige Außenwand des Schlauchs längs dem Außenemfang der Anschlussnippel und die innere Trennwand des Schlauchs längs der mitteren Begrenzungwand der Auschlußnippel anliegt und die zylindrischen, achsparallelen Durchlässe der Anschlussnippel in einer mit disen einstückigen, zylindrischen Endscheibe münden.

Durch die im gemeinsamen,zweckmässig metallischen Schutzmantel verlaufenden Kanäle lassen sich völlig getrennt beliebige Medien bzw. Kabel führen, wobei die abschliessenden Verbindungshülsen den endseitigen Anschluss der Vorrichtung an mit entsprechenden Medien- bzw. Kabelanschlüssen versehene Armaturen gestatten. Die Vorrichtung bildet somit einen einzigen flexiblen und kompakten Mehrkanalschlauch, der einfach zu montieren und zu handhaben ist, wobei die Kanäle ein und derselben Vorrichtung wahlweise zur Durchleitung beliebiger Medien bzw. Kabel verwendbar sind.

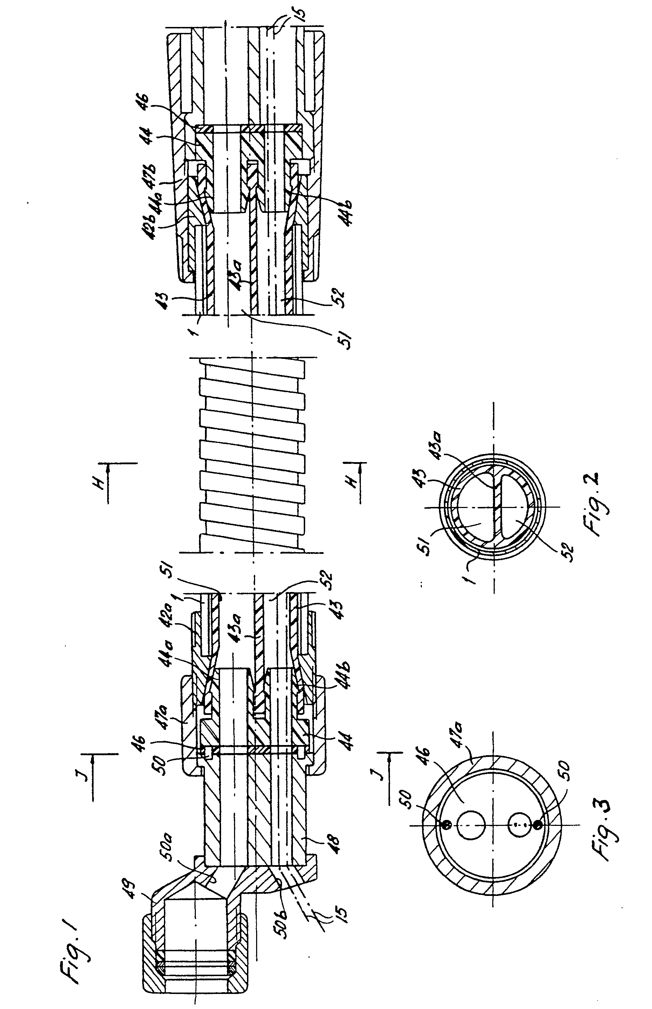

Im folgenden ist die Erfindung anhand der beiliegenden Zeichnung beispielsweise erläutert. In der Zeichnung zeigt:.
Fig. 1 im Achsialschnitt ein Beispiel der Vorrichtung,
Fig. 2 einen Querschnitt nach der Linie H-H in Fig. 1, und
Fig. 3 einen Querschnitt nach der Linie J-J in Fig. 1.
Die in den Fig. 1 - 3 gezeigte Verbindungsvorrichtung ist dazu bestimmt, eine mit elektrischen Steuermitteln zur Ventilbetätigung versehene Handbrause mit der entsprechenden ortsfesten Anschlussarmatur für Wasser und Steuerkabel einer Sanitärinstallation zu verbinden. Die gezeichnete Verbindungsvorrichtung besitzt einen aus metallischem Bandmaterial gewickelten, Kreisquerschnitt aufweisenden, flexiblen Schutzmantel 1. Die Enden des Schutzmantels 1 sind je in einer Verbindungshülse 42a bzw. 42b befestigt.

Zur Schaffung zweier paralleler (oder mehrerer) Kanäle 51, 52 ist ein einziger, zweckmässig durch Extrusion hergestellter, im Schutzmantel 1 angeordneter flexibler Schlauch 43 vorgesehen, der eine innere Trennwand 43a aufweist. Beim gezeichneten Beispiel besitzen die beiden Kanäle 51, 52 ungleichen Querschnitt, wobei der kleinere Kanal 52 der Kabeldurchführung und der grössere Kanal 51 der Wasserdurchleitung dient. Natürlich könnten die Kanäle 51, 52 durch mittige Anordnung der Trennwand 43a auch gleichen Querschnitt aufweisen, und der eine könnte z. B. für Heisswasser- und der andere für Kaltwasserdurchleitung bestimmt sein. Dabei könnte die Anordnung auch so getroffen sein, dass zwischen Schutzmantel 1 und Schlauch 43 ein weiterer Kanal geschaffen wäre. Die Endpartien des Schlauches 43 sind auf im Querschnitt den Kanälen 5l, 52 angepasste Anschlussnippel 44a, 44b aufgespannt und mittels der Verbindungshülse 42a bzw. 42b darauf festgeklemmt. Das Nippelpaar 44a, 44b ist einstückig mit einer Endscheibe 44 verbunden, der eine Dichtungsscheibe 46 vorgesetzt ist. Der Anschluss dieser Verbindungsvorrichtung an die Anschlussarmatur bzw. das Wasserabgabegerät erfolgt durch Ueberwurfmuttern 47a bzw. 47b. Zur einwandfreien Positionierung der Anschlussnippel bezüglich der zugeordneten Kanäle im Zwischennippel 48 der Anschlussarmatur 49 bzw. im Gehäuseteil 53 des Abgabegerätes sind zweckmässig Positionierungsstifte vorgeeehen, wie dies bei 50 in Fig. 3 und links in Fig. 1 angedeutet ist.

Die im Vorangehenden beispielsweise beschriebene flexible Mehrkanal-Verbindungsvorrichtung lässt sich zum Verbinden der verschiedensten Sanitärarmaturen verwenden, die zur Zuleitung und Abgabe bzw. Steuerung eines oder mehrerer Medien dienen. Die Einzelmontage mehrerer Einzelschläuche bzw. Kabel erübrigt sich.

## Patentansprüche

1. Verbindungsvorrichtung zwischen der ventilbestückten Anschlussarmatur und der Wasserausgabevorrichtung einer Sanitärinstallation mit einer flexiblen, beiderends Anschlussmittel aufweisenden Verbindungsleitung (43), die zur getrennten Durchleitung unterschiedlicher Medien gleichlaufende Kanäle (51, 52) aufweist, dadurch gekennzeichnet, dass in einem flexiblen Schutzmantel (1) mit Kreisquerschnitt ein, ebenfalls Kreisquerschnitt aufweisender, durch eine innere Trennwand (43a) in die Kanäle (51, 52) aufgeteilter flexibler Schlauch (43) aus gummielastischem Material angeordnet ist, wobei die Endpartien des Schlauches (43) mittels je einer zylindrischen Verbindungshülse (42a, 42b) auf im Querschnitt den Kanälen (51, 52) angepassten Anschlussnippeln (44a, 44b) festgeklemmt sind, so daß die kreisförmige Außenwand des Schläuches (43) längs dem Außenumfang der Anschlußnippel (42a, 44b) und die innere Trennwand (43a) des Schläuches (43) längs der mittleren Begrenzungswand der Anschlußnippel (41a, 42b) anliegt (Figuren 1, 3) und die zylindrischen, achsparallelen der Anschlußnippel Durchlässe in einer mit diesen einstückigen, zylindrischen Endscheibe (44) münden.

2. Verbindungsvorrichtung nach Anspruch 1, dadurch gekennzeichnet, dass der eine Kanal (51) der Wasserführung und der andere Kanal (52) der Durchführung von Elektrokabeln (15) dient, die einen Schalter an der Wasserausgabevorrichtung am einen Leitungsende mit einer Steuervorrichtung für die anschlußseitige ventilbestückte Armatur am andern Leitungsende verbinden.

## Claims

1. Coupling device between the valve-equipped connector fitting and the water delivery device of a sanitary system, comprising a flexible coupling Pipe (43) having connector means situated at either extremity, which for separate traversal by different fluids has equidirectional passages (51, 52), characterised in that a flexible hose (43) of rubber-elastic material, which is divided into the passages (51,52) by means of an internal partition and also has a circular cross-section, is situated within a flexible protective casing (1) having a circular cross-section, the terminal portions of the hose (43) being clamped fast in each case by means of a cylindrical coupling sleeve (42a, 42b) on coupling nipples (44a, 44b) cross-sectionally matched to the passages (51, 52), so that the circular outer side of the hose (43) bears along the outer periphery of the connector nipples (44a, 44b) and the internal partition (43a) of the hose bears along the median delimiting wall of the connector nipples (44a, 44b) (Figures 1, 3) and the cylindrical axially parallel passages of the connector nipple terminate in a cylindrical end plate (44) integral with it.

2. Coupling device according to claim 1, characterised in that the one passage (51) serves the purpose of ducting water and the other passage (52) serves the purpose of having electric cables (15) led through it, which cables connect a switch at the water delivery device at one conductor extremity to a control device for the connector-side valveequipped fitting at the other conductor extremity.

## Revendications

1. Dispositif de liaison entre la robinetterie de raccordement munie de soupapes et le dispositif de distribution d'eau d'une installation sanitaire, comportant un tuyau flexible de liaison (43) qui présente à chaque extrémité des moyens de raccordement, comporte des canaux (51, 52) destinés à acheminer séparément différents fluides, caractérisé en ce qu'une enveloppe protectrice flexible (1) de section circulaire renferme un tuyau flexible (43) en caoutchouc élastique, également de section circulaire et divisé en canaux (51, 52) par une paroi intérieure de séparation (43a), les parties terminales du tuyau (43) étant respectivement fixées à l'aide d'un manchon cylindrique de liaison (42a, 42b) sur des raccords filetés (44a, 44b) dont la section est adaptée, aux canaux (51, 52), si bien que la paroi extérieure circulaire du tuyau (43) repose le long du périmètre extérieur des raccords filetés (44a, 44b) et la paroi intérieure de séparation (43a) du tuyau (43) le long de la paroi médiane de délimitation des raccords filetés (44a, 44b) (figures 1, 3) et les passages cylindriques, parallèles à l'axe, des raccords filetés débouchant dans une plaque terminale (44) cylindrique qui ne forme qu'une seule pièce avec les raccords.

2. Dispositif de liaison selon la revendication 1, caractérisé en ce que l'un (51) des canaux est destiné à acheminer l'eau et l'autre (52) à guider les câbles électriques (15) qui relient un commutateur placé sur le dispositif de distribution d'eau à l'une des extrémités du tuyau avec un dispositif de commande pour la robinetterie munie de soupapes, côté raccordement, à l'autre extrémité du tuyau.

Fig.1

Fig.3

Fig.2

0 080 591